# FASCICULE DE BREVET EUROPEEN

(11) **EP 0 852 698 B1**
(45) Date de publication et mention de la délivrance du brevet: **11.04.2001**
(21) Numéro de dépôt: 96932641.2
(22) Date de dépôt: 24.09.1996
(51) Int. Cl.: G01C 19/56

(54) **GYROMETRE VIBRANT**
VIBRATIONSKREISEL
VIBRATING GYROMETER

(30) Priorité: 25.09.1995 FR 9511211
(43) Date de publication de la demande: 15.07.1998
(73) Titulaire: DE SALABERRY, Bernard Lucien Charles, F-78000 Versailles (FR)
(72) Inventeur: DE SALABERRY, Bernard Lucien Charles, F-78000 Versailles (FR)
(74) Mandataire: de Saint-Palais, Arnaud Marie
(86) Numéro de dépôt international: FR9601487
(87) Numéro de publication internationale: WO9712204

(56) Documents cités:
- US-A- 4 793 195
- US-A- 5 339 690
- PATENT ABSTRACTS OF JAPAN vol. 018, no. 189 (P-1721), 31 Mars 1994 & JP,A,06 003152 (MITSUTOYO CORP), 11 Janvier 1994,

## Description

La présente invention concerne un gyromètre vibrant destiné à mesurer les vitesses angulaires avec précision, dans un grand domaine de mesure. Ce gyromètre présente l'avantage, par rapport aux techniques généralement utilisées d'être plus précis, d'un faible coût et d'un encombrement réduit.

Les gyromètres vibrants sont basés sur l'action des forces de coriolis dues à une rotation imposée à des masses en mouvement.

Plusieurs modes de réalisations ont été proposés dans le passé pour réaliser un élément vibrant sensible aux vitesses angulaires.

Le procédé le plus fréquemment utilisé consiste à faire vibrer un corps d'épreuve cylindrique ou hémisphérique, perpendiculairement à son axe et à observer le déplacement des noeuds de vibration lorsque il est soumis à une rotation autour dudit axe.

Les principales difficultés proviennent des moyens employés pour créer la vibration et pour la mesurer.

Les solutions proposées à ce jour sont principalement de nature électrostatique ou piézo-électrique.

Les solutions électrostatiques ont le principal inconvénient de nécessiter des tensions électriques élevées et, pour être efficaces, des entrefers très faibles. Pour éviter des amorçages d'arc, l'ensemble doit être sous vide, ce qui, avec les précisions nécessaires pour les usinages, constituent des contraintes très onéreuses.
Les solutions piézo-électriques utilisent soit un cylindre, ou éventuellement un disque, réalisé entièrement en matériau piézo-électrique, soit des petits éléments piézo-électriques rapportés, par collage le plus souvent, sur un cylindre métallique.

Des cylindres piézo-électriques peuvent être réalisés en quartz. Les difficultés d'usinage sont considérables. Ils peuvent être réalisés en céramiques piézo-électriques, avec l'inconvénient de surtensions assez faibles et donc de performances médiocres, tout en ayant des coûts encore importants.

L'utilisation de petits éléments piézo-électriques rapportés sur un cylindre métallique permet de réduire un peu les coûts, mais les performances ne sont guère améliorées du fait des perturbations apportées par les masses desdites céramiques, localisées sur des points particuliers du cylindre.

Une autre difficulté majeure de toute ces solutions réside dans le fait que les signaux de détection sont d'un niveau électrique très faible et qu'il est très difficile de les protéger des signaux d'excitation de niveau élevé et situés dans la même bande de fréquence.

C'est notament le cas du brevet américain 4 793 195 qui décrit un gyromètre à cylindre vibrant muni d'une détection electrostatique et excité magnétiquement à fréquence moitié de sa fréquence de vibration pour réduire ces effets.

La présente invention apporte une solution qui ne met en oeuvre que des moyens extrêmement simples. La précision du gyromètre obtenu ne dépend que de la précision d'usinages mécaniques très classiques et donc peu onéreux ainsi que de paramètres électroniques aisément maîtrisables. Cette solution présente par conséquent l'avantage d'être très économique.

Elle est basée sur l'emploi d'un cylindre vibrant métallique magnétique excité par un champ magnétique alternatif et dont le mouvement de vibration est détecté optiquement à l'aide d'une source lumineuse et de cellules photoélectriques coopérant avec le dispositif d'excitation magnétique.

L'utilisation de moyens optiques pour détecter le déplacement d'un corps d'épreuve dans des capteurs gyrométriques ou accélérométriques est bien connue. C'est par exemple le cas du gyromètre décrit dans le brevet américain 5 339 690 où les mouvements d'un ensemble mobile autour d'une charnière sont détectés à l'aide d'une tige, éclairée par une source lumineuse, et qui se déplace devant une cellule photoélectrique double.

La présente invention propose une configuration de moyens optiques nouvelle qui permet de détecter l'amplitude des vibrations en divers points d'un cylindre vibrant.

L'utilisation d'une excitation magnétique présente en outre l'avantage de pouvoir générer une vibration à une fréquence double de celle des signaux d'excitation. Il est par conséquent plus facile de protéger, par un filtrage adapté, les signaux de détection de l'influence desdits signaux d'excitation.

L'invention concerne donc un gyromètre vibrant du type comportant :
- un élément vibrant mince de révolution,
- des moyens d'excitation permettant d'engendrer des vibrations en au moins un point de l'élément vibrant de manière à faire apparaître, sur ledit élément vibrant, une succession de noeuds et de ventres de vibrations susceptibles de se déplacer sous l'effet d'une vitesse de rotation angulaire et
- des moyens de détection desdites vibrations, disposés de manière à pouvoir détecter lesdits noeuds et/ou lesdits ventres, caractérisé en ce que lesdits moyens de détection sont des moyens optiques comportant au moins un capteur photoélectrique mesurant la quantité de lumière provenant d'une source lumineuse et se propageant dans un passage de lumière limité d'un côté par une partie de l'élément vibrant, les mouvements dudit élément vibrant modifiant la largeur dudit passage de lumière de manière à obtenir, à la sortie du capteur photoélectrique, un signal modulé au rythme des vibrations dudit élément vibrant.

Des modes de réalisation de l'invention seront décrits ci-après, à titre d'exemples non limitatifs, avec référence aux dessins annexés dans lesquels :
La figure 1 est un schéma de principe montrant le fonctionnement d'un gyromètre vibrant,
La figure 2 est une vue en coupe du gyromètre vibrant selon l'invention,
La figure 3 est une vue en coupe détaillée du circuit optique du gyromètre selon l'invention,
La figure 4 est une vue de dessus, du circuit magnétique du gyromètre de la figure 2,
La figure 5 est un schéma de principe de l'électronique qui peut être associée au gyromètre vibrant selon l'invention.

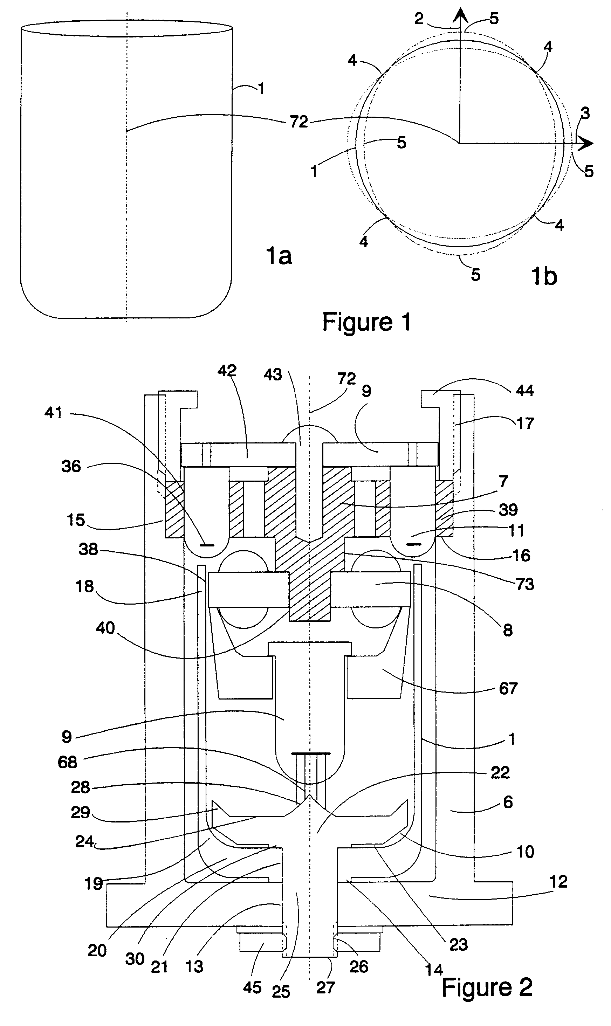

Comme précédemment mentionné, et ainsi que le montre la figure 1, un gyromètre vibrant comporte un corps d'épreuve 1, ayant un axe de symétrie 71, cylindrique par exemple, figure la, mais qui peut être plat ou avoir toute autre forme, et qui est excité en vibration, figure 1b, selon deux directions principales 2 et 3, perpendiculaires entre elles et à l'axe 71 du corps d'épreuve 1, de telle sorte qu'il apparaisse quatre noeuds 4 et quatre ventres 5 de vibrations, les déplacements des parties situées sur les ventres de vibrations étant en opposition de phase pour les deux directions principales d'excitation 2 et 3.

Lorsque le corps d'épreuve 1 est soumis à une rotation autour d'un axe perpendiculaire aux deux directions principales d'excitation 2 et 3, les noeuds de vibrations ne tournent pas avec le corps d'épreuve. Ils ne restent pas non plus fixes dans l'espace, mais il tournent à une vitesse angulaire qui est une fraction de la vitesse angulaire du corps d'épreuve. Le rapport entre les vitesses angulaires du corps d'épreuve et des noeuds de vibration dépend de la géométrie du corps d'épreuve.

Les noeuds de vibration 4 ne sont donc pas liés au corps d'épreuve 1, mais se déplacent, par rapport à celui-ci, avec une vitesse angulaire proportionnelle à la vitesse angulaire du corps d'épreuve lui-même.

Il en est de même pour un corps d'épreuve réalisé sous la forme d'un disque plat. Dans ce cas, c'est une vitesse angulaire autour de l'axe du disque qui provoquera le déplacement des noeuds de vibration à une vitesse angulaire différente.

On conçoit donc que, pour réaliser un gyromètre capable de mesurer une vitesse angulaire, il faille résoudre deux problèmes qui sont d'une part l'excitation en vibration et d'autre part la détection de la position des noeuds de vibration par rapport à une référence liée au corps d'épreuve.

La figure 2 montre en vue en coupe une réalisation préférée du gyromètre vibrant selon l'invention, apte à résoudre ces deux problèmes de façon économique.

Celui-ci comporte :
- un boîtier extérieur cylindrique 6,
- un corps d'épreuve ou cylindre vibrant 1,
- un support d'excitation-détection 7,
- un excitateur magnétique ou stator 8,
- une source lumineuse 9,
- des moyens d'orientation et de concentration de la lumière,
- au moins un capteur photoélectrique ou photodétecteur 11, de préférence du type phototransistor,
- des moyens de fixation, de câblage et de fermeture.

Le boîtier extérieur 6, de forme cylindrique, est fermé à l'une de ses extrémités par une plaque formant fond 12. Cette plaque est de préférence d'un diamètre supérieur à celui du boîtier pour servir avantageusement de moyen de fixation du gyromètre sur un support d'utilisation. La forme extérieure de cette plaque formant fond peut également n'être pas circulaire ou comporter des trous de fixation. Ce fond 12 est percé en son centre d'un trou cylindrique 13 parfaitement alésé.

L'autre extrémité du boîtier extérieur comporte, intérieurement, une partie munie d'un alésage 15 d'un diamètre un peu supérieur au diamètre intérieur du reste du boîtier, les deux alésages étant raccordés par un lamage circulaire 16. Cet alésage est prolongé, du côté de l'extrémité du boîtier par un taraudage 17.

Le corps d'épreuve est réalisé sous forme d'un cylindre vibrant 1 à paroi mince, ayant un axe de symétrie 71, ouvert à l'une de ses extrémités 18 et fermé à son autre extrémité 19 par une paroi de préférence plus épaisse que celles du cylindre lui-même et formant un fond 20.

Ledit fond 20 est lui-même percé en son centre d'un trou 21 également parfaitement alésé et de préférence de même diamètre que celui du trou 13 du fond 12 du boîtier 6. Ce trou 21 est lui même entouré d'une surépaisseur 14 de faible diamètre et extérieure au cylindre vibrant.

Le raccordement entre ledit fond 20 et la paroi cylindrique mince du cylindre vibrant peut être fait à angle vif, par des chanfreins, ou mieux encore par des arrondis.

Les moyens d'orientation et de concentration de la lumière sont, dans une version préférée de l'invention, réalisés sous forme d'un réflecteur 10 qui comporte une plaque 22, ayant deux faces, une face inférieure 23 et une face supérieure 24.
La face inférieure 23 est centrée à l'extrémité d'une tige cylindrique 25. Cette tige est d'un diamètre identique à ceux des trous 13 et 21 du boîtier 6 et du corps d'épreuve ou cylindre vibrant 1. Elle comporte un filetage 26 à son extrémité 27 opposée à l'extrémité solidaire de la plaque 22.

La plaque 22 comporte, sur sa face supérieure 24, opposée à la tige 25, plusieurs surfaces usinées et réfléchissantes :
- au centre une surface 28 sensiblement conique, et dont la pointe dépasse de ladite face, la génératrice du cône étant de préférence légèrement courbe en concavité, l'axe du cône coïncidant avec l'axe de la tige 25.
- à la périphérie, une surface 29, sensiblement en forme de tronc de cône et formant un creux avec ladite face 24, l'axe du tronc de cône coïncidant également avec l'axe de la tige 25.

La face inférieure 23 comporte, autour de la tige 25, une surépaisseur 30, analogue à la surépaisseur 14 du fond 12 du cylindre vibrant 1.

Dans une version plus sophistiquée de l'invention, la surface réfléchissante 28 est constituée de facettes légèrement concaves et la surface réfléchissante 29 est constituée de petits miroirs plans sensiblement orientés à 45 degrés par rapport à l'axe 72 du cylindre vibrant.

Le support d'excitation-détection 7 porte notamment :
- l'excitateur magnétique ou stator,
- la ou les sources lumineuses,
- le ou les capteurs photoélectriques 11.

Il vient prendre place dans l'alésage 15 du boîtier 6 et repose sur le lamage 16.

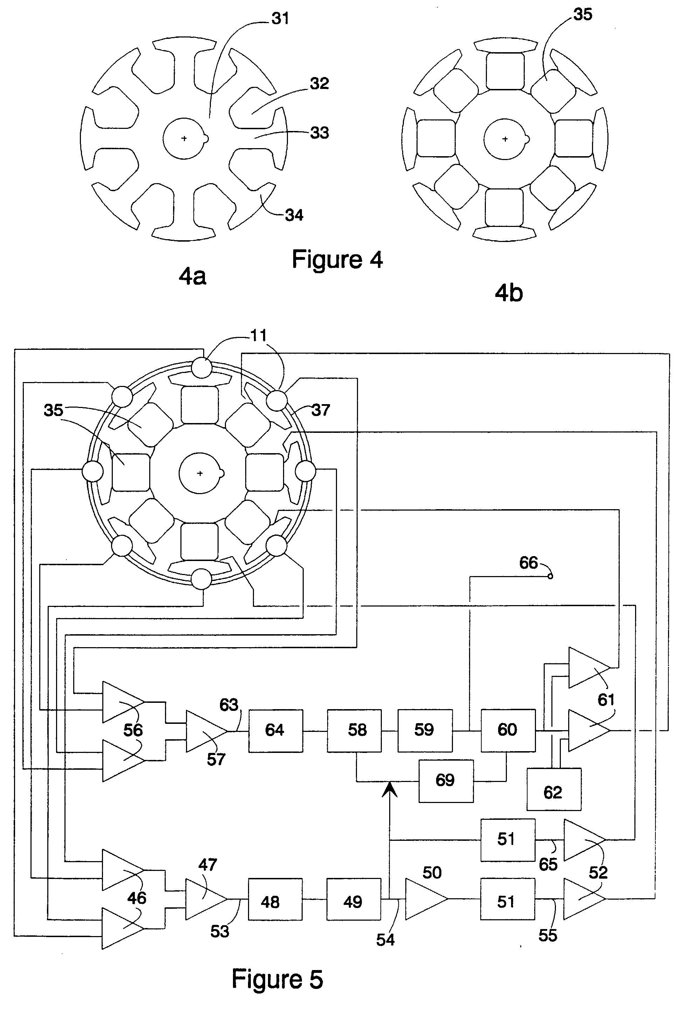

L'excitateur magnétique est de préférence réalisé en utilisant, figure 4a, des tôles 31 du genre de celles employées pour les rotors bobinés de moteurs électriques. Plusieurs de ces tôles 31 sont empilées pour constituer un stator 8 d'un diamètre légèrement inférieur au diamètre intérieur du cylindre vibrant 1. Ce stator comporte huit encoches 32 dans lesquelles sont introduits des bobinages électriques. Ces encoches sont séparées les unes des autres par huit dents 33 relativement étroites, elles-mêmes prolongées par huit masses polaires 34.
Les bobinages sont constitués, figure 4b, de huit bobines 35 de fil conducteur isolé entourant chacune une des dents 33 du stator.
Les bobines entourant deux dents opposées jouent le même rôle. Elles sont branchées de préférence en série et constituent ainsi quatre bobinages indépendants orientés dans quatre directions séparées deux à deux par 45 degrés ou un multiple de 45 degrés.

Ce stator 8 est fixé sur le support 7 commun aux deux autres composants de l'ensemble excitation détection de telle sorte qu'il se trouve placé coaxialement à l'intérieur du cylindre vibrant 1, prés de l'extrémité ouverte 18 dudit cylindre. La paroi intérieure du cylindre vibrant 1 et la partie externe des masses polaires 34 forment un entrefer 38.

La source lumineuse est constituée de préférence par une ou plusieurs diodes électroluminescentes 9, placées contre le stator 8 à l'aide d'un support adapté 67 et à l'intérieur du cylindre vibrant 1, de telle sorte que le faisceau lumineux émis 68 soit lui aussi coaxial avec le cylindre vibrant 1 et tourné vers le centre du réflecteur 10.

L'ensemble détecteur comporte au moins deux capteurs photoélectriques 11, et de préférence huit, ayant une surface sensible 36, placés, figure 5, sur un cercle 37 dont le diamètre est sensiblement égal au diamètre intérieur du cylindre vibrant 1. Ce cercle est positionné à l'extérieur dudit cylindre de sorte que les surfaces sensibles 36 des capteurs photoélectriques 11 se trouvent en regard de l'entrefer 38 formé entre le cylindre vibrant et le diamètre extérieur du stator 8. Les capteurs photoélectriques 11 sont séparés sur le cercle 37 d'un angle de 45° et, si leur nombre est inférieur à huit, deux au moins font entre eux un angle multiple impair de 45°. Les capteurs photoélectriques sont par ailleurs placés en regard du centre des masses polaires du stator 8. Pratiquement, les capteurs photoélectriques sont avantageusement des phototransistors placés dans huit alvéoles 41 aménagées dans le support d'excitation-détection 7. Ce support, de révolution, comporte une première partie 39 dont le diamètre est tel qu'il puisse être centré et appuyé dans l'alésage 15 du boîtier extérieur 6 et une seconde partie comportant deux diamètres successifs décroissants 73 et 40, dont le second est destiné à servir de support au stator magnétique 8.
Les 8 alvéoles 41 sont percées dans la première partie 39.
Les liaisons électriques des photodétecteurs 11 sont soudées sur un circuit imprimé 42 lui-même rendu solidaire du support 7 par une vis 43.

Un écrou à filetage extérieur 44, vissé dans le taraudage 17, vient serrer et fixer la partie extérieure 39 du support 7 sur le lamage 16 du boîtier 6.

Le montage est extrêmement simple :
- Le réflecteur 10 est introduit dans le cylindre vibrant 1 et l'ensemble est fixé dans le boîtier 6 par un écrou 45,
- l'ensemble excitation détection est assemblé séparément et introduit dans le boîtier 6, mis en appui sur le lamage 16 et serré par l'écrou 44.

Les surépaisseurs 14 et 30 laissent dégagée la partie extérieure du fond 20 du cylindre vibrant 1 et lui permettent de vibrer librement.

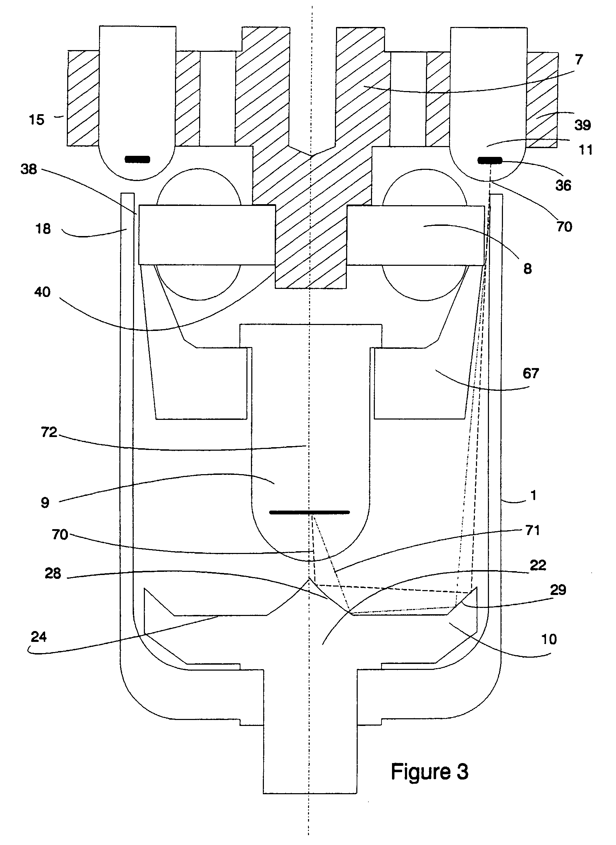

La figure 3 permet de mieux comprendre le fonctionnement de la détection photoélectrique. Deux rayons 70 et 71 par exemple, pris parmi tous ceux issus de la source lumineuse 9, se réfléchissent successivement sur la pointe conique et légèrement concave 28 et sur la partie en tronc de cône 29 du réflecteur 10. Ils remontent ensuite vers l'entrefer 38 séparant le cylindre vibrant 1 et les masses polaires 34 du stator 8, ledit entrefer 38 constituant ainsi des passages de lumière. Le rayon 70 presque parallèle à la paroi du cylindre vibrant 1 traverse ledit entrefer 38 pour tomber sur la surface sensible 36 du capteur photoélectrique 11 alors que le rayon 71 arrive plus incliné sur cet entrefer et est intercepté par l'extrémité 18 du cylindre vibrant. On conçoit aisément que la quantité de lumière qui traverse le passage de lumière constitué par l'entrefer 38 dépende de la largeur dudit passage et donc de la position de la paroi du cylindre vibrant 1. Lorsque celui-ci vibre, il fait varier l'entrefer et donc le passage de lumière et la quantité de lumière que reçoit la surface sensible 36 du capteur photoélectrique 11. Le signal qui en est issu est donc modulé au rythme des vibration du cylindre vibrant 1.

La figure 5 présente le principe d'une électronique associée au gyromètre.

Elle comprend une partie excitation et une partie détection.
La partie excitation comprend elle-même :
- deux amplificateurs adaptateurs sommateurs 46,
- un amplificateur différentiel 47,
- un circuit de filtrage 48,
- un générateur de signaux périodiques de type à bouclage de phase 49,
- un circuit déphaseur de 180 degrés 50,
- deux diviseurs de fréquence par deux 51,
- deux amplificateurs de puissance 52.

Chacun des deux amplificateurs sommateurs 46 reçoit les signaux de deux photodétecteurs 11 opposés, chaque amplificateur recevant les signaux de paires de photodétecteurs placées à 90 degrés l'une de l'autre sur la circonférence de détection.
Les sorties des deux amplificateurs 46 sont reliées aux entrées différentielles de l'amplificateur 47. Du fait que les signaux issus des deux paires de photodétecteurs sont en opposition de phase, la sortie 53 dudit amplificateur représente sensiblement quatre fois la variation d'intensité lumineuse vue par un de ces quatre photodétecteurs.
Cette sortie 53, après filtrage par le circuit 48 est envoyée à l'oscillateur à verrouillage de phase 49 qui alimente lui-même, directement et à travers le déphaseur 50, les deux diviseurs de fréquence 51 dont les sorties 55 et 65 sont envoyées à l'entrée de l'un des amplificateurs de puissance 52.
Enfin, les deux amplificateurs de puissance 52 alimentent chacun une paire de bobines 35, orientées à 90 degrés l'une de l'autre et situées en regard des deux paires de photodétecteurs utilisés pour les entrées des amplificateurs 46.

Ainsi constituée, l'excitation du gyromètre fonctionne comme suit :
Les signaux issus de l'oscillateur 49 et du déphaseur 50, après la division en fréquence par deux, se trouvent déphasés entre eux de 90°. Ils excitent chacun une paire de bobines qui créent chacune un champ magnétique alternatif. Ces champs créent des forces d'attraction sur le cylindre vibrant proportionnelles au carré des inductions magnétiques. Ces forces sont donc à une fréquence double de celle qui alimente les bobines et donc à la même fréquence que celle qui est fournie par l'oscillateur. Du fait du déphasage de 90° des champs magnétiques, les forces sont elles-mêmes déphasées de 180° et peuvent donc exciter en opposition de phase les deux directions de vibration.

Si la fréquence correspond à la résonance du cylindre vibrant 1, celui-ci oscille et les capteurs photoélectriques 11 détectent cette oscillation en créant des signaux dont la somme issue de l'amplificateur 47 est utilisé par le bouclage de phase de l'oscillateur 49 pour asservir sa fréquence d'oscillation à la fréquence propre du cylindre vibrant.

La partie détection comprend :
- deux amplificateurs adaptateurs sommateurs 56,
- un amplificateur différentiel 57,
- un démodulateur 58,
- un circuit correcteur 59,
- un modulateur 60,
- deux amplificateurs de puissance 61,
- un circuit générateur de polarisations 62,
- un circuit correcteur de phase 69.

Chacun des deux amplificateurs sommateurs 56 reçoit les signaux de deux photodétecteurs 11 opposés, chaque amplificateur recevant les signaux de paires de photodétecteurs placées à 90 degrés l'une de l'autre sur la circonférence de détection et à 45° des deux paires de photodétecteurs utilisés pour asservir l'excitation.
Les sorties des deux amplificateurs 56 sont reliées aux entrées différentielles de l'amplificateur 57. Du fait que les signaux issus des deux paires de photodétecteurs sont en opposition de phase, la sortie 63 dudit amplificateur représente sensiblement quatre fois la variation d'intensité lumineuse vue par un de ces quatre photodétecteurs.
Cette sortie 63 est envoyée, à travers le filtre 64, au démodulateur 58 dont le signal de référence provient de la sortie 54 de l'oscillateur 49.
Après démodulation, le signal est transmis à un réseau correcteur 59 puis remodulé par le même signal de référence corrigé en phase par un correcteur de phase 69 et enfin envoyé aux deux amplificateurs de puissance 61. Ceux-ci alimentent chacun une paire des quatre bobines d'excitation restantes.
Un circuit de polarisation 62 ajoute, à l'entrée de chaque amplificateur de puissance 62, une tension continue au signal issu du modulateur 60, lesdits amplificateurs de puissance 62 recevant chacun une tension de polarisatin égale et opposée à celle de l'autre, de façon à créer des forces en opposition de phase au droit des paires de bobines 35 correspondantes.
Ainsi constituée, la détection du gyromètre fonctionne comme suit :
Si le gyromètre tourne, les noeuds de vibrations tendent à se déplacer. Il apparaît une oscillation devant les photodétecteurs 11 qui détectent cette oscillation en créant des signaux dont la somme issue de l'amplificateur 57 est démodulée et, après correction et remodulation, utilisée pour contrer et annuler ladite oscillation. Le signal remodulé et amplifié par les amplificateurs de puissance 61 commande les bobines. Du fait de la polarisation qui crée une force d'attraction moyenne constante sur le corps vibrant au droit des bobines, le signal de commande crée une variation de cette force permanente à la même fréquence et donc capable de contrer l'oscillation.
La sortie 66 du circuit correcteur 59 est l'image de la tension nécessaire pour annuler l'oscillation de détection et maintenir les noeuds de vibration fixes. Elle représente donc la vitesse angulaire du gyromètre.
Du fait que le système est asservi, tant pour la détection que pour l'excitation, il peut encore fonctionner si l'un ou même plusieurs des photodétecteurs ou des bobines sont défaillants. Ceci lui confère donc une très grande fiabilité. Il faut que le gyromètre dispose au minimum d'un photodétecteur et d'une bobine pour chacune des fonctions de détection et d'excitation. Une version simplifiée du gyromètre pourraient d'ailleurs ne comporter que deux photodétecteurs et deux bobines.

A noter que la source lumineuse 9 peut être constituée de plusieurs diodes électroluminesdentes orientée directement vers la surface réfléchissante extérieure 29 ou encore directement vers les passages de lumière que constitue l'entrefer 38.

A noter encore que l'ensemble du dispositif d'excitation et de détection peut être appliqué à toute autre forme de corps vibrant, à un disque plan par exemple, sans sortir du cadre de l'invention.

## Revendications

1. Gyromètre vibrant du type comportant
- un élément vibrant mince de révolution (1),
- des moyens d'excitation (8) permettant d'engendrer des vibrations en au moins un point (5) de l'élément vibrant (1) de manière à faire apparaître, sur ledit élément vibrant, une succession de noeuds (4) et de ventres (5) de vibrations susceptibles de se déplacer sous l'effet d'une vitesse de rotation angulaire et
- des moyens de détection desdites vibrations, disposés de manière à pouvoir détecter lesdits noeuds et/ou lesdits ventres,
caractérisé en ce que lesdits moyens de détection sont des moyens optiques comportant au moins un capteur photoélectrique (11) mesurant la quantité de lumière provenant d'une source lumineuse (9) et se propageant dans un passage de lumière (38) limité d'un côté par une partie (18) de l'élément vibrant (1), les mouvements dudit élément vibrant (1) modifiant la largeur dudit passage de lumière de manière à obtenir, à la sortie du capteur photoélectrique (11), un signal modulé au rythme des vibrations dudit élément vibrant (1).

2. Gyromètre vibrant selon la revendication 1,
caractérisé en ce que ledit élément vibrant (1) est sensiblement cylindrique, constituant un cylindre vibrant (1), ayant une extrémité ouverte (18) à l'intérieur de laquelle est placé un stator magnétique (8) composés de tôles magnétiques (31) ayant de préférence huit dents (33), terminées par des masses polaires (34), lesdites dents étant entourées par des bobines de fils conducteurs isolés (35), ledit stator ayant un diamètre extérieur un peu inférieur au diamètre intérieur dudit cylindre vibrant (1) de façon à ménager, entre chaque masse polaire (34) et la paroi intérieure dudit cylindre vibrant, un entrefer (38) constituant un passage de lumière pour les moyens optiques de détection.

3. Gyromètre vibrant selon une des revendications 1 et 2
caractérisé en ce que les moyens optiques de détection des vibrations comportent :
- au moins une source lumineuse, de préférence une diode électroluminescente (9),
- au moins deux passages de lumière (38) et de préférence huit, passant le long du cylindre vibrant (1), répartis autour de l'axe de symétrie (72) dudit cylindre vibrant et dont deux au moins font, par rapport audit axe de symétrie, un angle multiple impair de 45°.
- au moins deux capteurs photoélectriques (11) et de préférence huit, placés chacun en regard d'un passage lumineux et recevant la lumière qui en est issue.

4. Gyromètre vibrant selon une des revendications 2 et 3
caractérisé en ce que les entrefers (38) séparant chaque masse polaire (34) du stator (8) de la paroi du cylindre vibrant (1), constituent les passages de lumière et en ce que les capteurs photoélectriques (11) sont placés sur un cercle (37) d'un diamètre sensiblement égal au diamètre intérieur du cylindre vibrant (1), en regard du centre des masses polaires (34).

5. Gyromètre vibrant selon la revendication 3,
caractérisé en ce que les moyens optiques de détection des vibrations du cylindre vibrant comportent, entre la source lumineuse et les passages de lumière, des moyens d'orientation et de concentration de la lumière comprenant préférentiellement deux surfaces réfléchissantes coopérant entre elles, à savoir :
- une première surface (28) sensiblement conique, dont la pointe est tournée vers la source lumineuse (9), dont l'axe soit sensiblement confondu avec l'axe de symétrie (72) du cylindre vibrant (1) et dont la génératrice soit courbe de façon à creuser légèrement ladite surface conique (28),
- une deuxième surface (29), en forme de tronc de cône d'angle voisin de 45°, dont l'axe coïncide avec l'axe de la première surface (28), et d'un diamètre extérieur légèrement inférieur au diamètre intérieur du cylindre vibrant (1).

6. Gyromètre vibrant selon la revendication 5,
caractérisé en ce qu'au moins une des deux surfaces réfléchissantes (28) et (29) est placée sur une face (24) d'une plaque (22), formant ainsi un réflecteur (10) et en ce que ce réflecteur comporte, sur une face (23) opposée à la face (22), une tige (25).

7. Gyromètre vibrant selon une des revendications 3 et 6,
caractérisé en ce que le cylindre vibrant (1) est fermé à son autre extrémité (19) par un fond (20), en ce qu'il est placé à l'intérieur d'un boîtier (6) de préférence cylindrique, fermé à une de ces extrémité par un fond (12), le fond (20) du cylindre vibrant étant appuyé contre le fond (12) dudit boîtier (6) par l'intermédiaire d'une surépaisseur (14), en ce que le réflecteur (10) est placé à l'intérieur du cylindre vibrant (1), appuyé contre le fond (20) dudit cylindre vibrant par l'intermédiaire d'une surépaisseur (30), la tige (25) du réflecteur (10) traversant successivement le fond (20) du cylindre vibrant (1) et le fond (12) du boîtier (6), l'ensemble étant de préférence serré par un écrou (45), les surépaisseurs (14) et (30) étant de préférence usinées sur deux des trois pièces assemblées par la tige (25), et de préférence sur la face (23) du réflecteur (10) d'une part et à l'extérieur du cylindre vibrant (1) sur le fond (20) d'autre part, respectivement (30) et (14).

8. Gyromètre vibrant selon une des revendications 1 et 2, mis en oeuvre par une électronique,
caractérisé en ce que cette électronique comporte, dans une partie détection, au moins un circuit de polarisation (62) et en ce que au moins une première dent (33) du stator (8) n'est pas magnétiquement polarisée tandis qu'au moins une autre dent (33), formant avec la première un angle multiple impair de 45°, est polarisée magnétiquement.

9. Gyromètre vibrant selon la revendication 1,
caractérisé en ce que l'élément vibrant mince est constitué par un disque plan.

## Claims

1. Vibrating gyrometer of the type including :
- a thin vibrating element of revolution (1),
. excitation means (8) for generating vibrations on at least one point (5) of the vibrating element (1) so as to have appear on said vibrating element a succession of vibration nodes (4) and antinodes (5) able to move under the effect of an angular speed of rotation, and
. means for detecting said vibrations, arranged so as to be able to detect said nodes and/or antinodes,
. characterised in that said detection means are optical means comprising at least one photoelectric sensor (11) measuring the amount of light originating from a light source (9) and propagating inside a light passage (38) limited on one side by a portion (18) of the vibrating element (1), the movements of said vibrating element (1) modifying the width of said light passage so as to obtain at the outlet of the photoelectric sensor (11), a signal modulated to the rhythm of the vibrations of said vibrating element (1).

2. Gyrometer according to claim 1,
characterised in that said vibrating element (1), approximately cylindrical, constituting a vibrating cylinder (1) having one open extremity (18) inside which a magnetic stator (8) is placed composed of magnetic plates (31) preferably having eight teeth (33) ended by polar masses (34), said teeth being surrounded by coils of insulated conductor wires (35), said stator having an external diameter slightly smaller than the internal diameter of said vibrating cylinder (1) so as to provide between each polar mass (34) and the internal wall of said vibrating cylinder an air gap (38) constituting a light passage for the optical detection means.

3. Vibrating gyrometer according to one of the claims 1 and 2,
characterised in that the optical detection means for detecting vibrations comprise :
. at least one light source, preferably a light emitting diode (9),
. at least two light passages (38) and preferably eight, passing along the vibrating cylinder (1) and distributed around the axis of symmetry (72) of said vibrating cylinder and having at least two forming a multiple odd angle of 45° with respect to said axis of symmetry.
. at least two photoelectric sensors (11) and preferably eight each placed opposite a light passage and receiving the light originating from it.

4. Vibrating gyrometer according to one of the claims 2 and 3,
characterised in that the air gaps (38) separating each polar mass (34) of the stator (8) of the wall of the vibrating cylinder (1) constitute the light passages and in that the photoelectric sensors (11) are placed on a circle (37) having a diameter approximately equal to the internal diameter of the vibrating cylinder (1) opposite the centre of the polar masses (34).

5. Vibrating gyrometer according to claim 3,
characterised in that the optical detection means for detecting the vibrations of the vibrating cylinder comprise between the light source and the light passages, light orientation and concentration means preferably including two reflecting surfaces co-operating with each other, namely :
. a first approximately conical surface (28) whose point is orientated towards the light source (9) whose axis is approximately merged with the axis of symmetry (72) of the vibrating cylinder (1) and whose generating line is curved so as to lightly hollow out said conical surface (28),
. a second surface (29) with the shape of a truncated cone having an angle of close to 45° whose axis coincides with the axis of the first surface (28) and having an external diameter slightly smaller than the internal diameter of the vibrating cylinder (1).

6. Vibrating gyrometer according to claim 5,
characterised in that at least one of the two reflecting surfaces (28) and (29) is placed on one face (24) of a plate (22), thus forming a reflector (10) and in that this reflector comprises a rod (25) on one face (23) opposite the face (22).

7. Vibrating gyrometer according to one of the claims 3 and 6,
characterised in that the vibrating cylinder (1) is closed at its other extremity (19) by a bottom (20), in that it is placed inside a preferably cylindrical box (6) closed at one of these extremities by a bottom (12), the bottom (20) of the vibrating cylinder leaning against the bottom (12) of said box (6) by means of an excess thickness (14), in that the reflector (10) is placed inside the vibrating cylinder (1) leaning against the bottom (20) of said vibrating cylinder by means of an excess thickness (30), the rod (25) of the reflector (10) successively traversing the bottom (20) of the vibrating cylinder (1) and the bottom (12) of the box (6), the unit preferably being tightened by a nut (45), the excess thicknesses (14) and (30) preferably being machined on two of three elements assembled by the rod (25) and preferably respectively (30) and (14) firstly on the face (23) of the reflector (10) and secondly outside the vibrating cylinder (1) on the bottom (20).

8. Vibrating gyrometer according to one of the claims 1 and 2, implemented by electronics,
characterised in that these electronics include in one detection portion, at least one polarisation circuit (62) and in that at least one first tooth (33) of the stator (8) is not magnetically polarised, whereas at least one other tooth (33) forming with the first a multiple odd angle of 45° is polarised magnetically.

9. Vibrating gyrometer according to claim 1,
characterised in that the thin vibrating element is constituted by a flat disk.

## Patentansprüche

1. Vibrierender Kreisel der Art mit
- einem dünnen, vibrierenden Drehelement (1),
- Erregungsmitteln (8), die es erlauben, Vibrationen an mindestens einem Punkt (5) des vibrierenden Elementes (1) zu erzeugen, um auf dem vibrierenden Element eine Folge von Knoten (4) und Bäuchen (5) von Vibrationen sichtbar zu machen, die dazu neigen, sich unter dem Einfluß einer Winkeldrehzahl zu verschieben, und
- Mitteln zur Detektion der Vibrationen, die so angeordnet sind, daß sie die Knoten und/oder die Bäuche detektieren können,
dadurch gekennzeichnet, daß die Detektionsmittel optische Mittel sind, die mindestens einen photoelektrischen Sensor (11) aufweisen, der die Lichtmenge mißt, die von einer Lichtquelle (9) ausgeht und sich in einem Lichtdurchlaß (38) ausbreitet, der auf einer Seite durch einen Teil (18) des vibrierenden Elementes (1) begrenzt ist, wobei die Bewegungen des vibrierenden Elementes (1) die Breite des Lichtdurchlasses so verändern, daß am Ausgang des photoelektrischen Sensors (11) ein auf den Takt der Vibrationen des vibrierenden Elementes (1) moduliertes Signal erhalten wird.

2. Vibrierender Kreisel nach Anspruch 1, dadurch gekennzeichnet, daß das vibrierende Element (1) im wesentlichen zylindrisch ist und einen vibrierenden Zylinder (1) bildet, der ein offenes Ende (18) aufweist, in9 dessen Innerem ein magnetischer Stator (8) angeordnet ist, der aus magnetischen Blechen (31) mit vorzugsweise acht Zähnen (33) besteht, die in polaren Massen (34) auslaufen, wobei die Zähne von isolierten Leiterdrahtspulen (35) umgeben sind und der Stator einen Außendurchmesser aufweist, der etwas kleiner als der Innendurchmesser des vibrierenden Zylinders (1) ist, um zwischen jeder polaren Masse (34) und der Innenwand des vibrierenden Zylinders einen Spalt (38) auszubilden, der einen Lichtdurchlaß für die optischen Detektionsmittel bildet.

3. Vibrierender Kreisel nach einem der Ansprüche 1 und 2, dadurch gekennzeichnet, daß die optischen Mittel zur Detektion der Vibrationen folgendes aufweisen:
- mindestens eine Lichtquelle, vorzugsweise eine Leuchtdiode (9),
- mindestens zwei Lichtdurchlässe (38) und vorzugsweise acht, die längs des vibrierenden Zylinders (1) verlaufen und um die Symmetrieachse (73) des vibrierenden Zylinders verteilt sind, wobei mindestens zwei derselben relativ zur Symmetrieachse einen ungeraden Mehrfachwinkel von 45° bilden,
- mindestens zwei photoelektrische Sensoren (11) und vorzugsweise acht, die jeweils gegenüber einem Lichtdurchlaß angeordnet sind und das Licht empfangen, das aus diesem austritt.

4. Vibrierender Kreisel nach einem der Ansprüche 2 und 3, dadurch gekennzeichnet, daß die Spalte (38), welche jede polare Masse (34) des Stators (8) von der Wand des vibrierenden Zylinders (1) trennen, die Lichtdurchlässe bilden und daß die photoelektrischen Sensoren (11) auf einem Kreis (37) mit einem Durchmesser, der im wesentlichen dem Innendurchmesser des vibrierenden Zylinders (1) entspricht, gegenüber dem Mittelpunkt der polaren Massen (34) angeordnet sind.

5. Vibrierender Kreisel nach Anspruch 3, dadurch gekennzeichnet, daß die optischen Mittel zur Detektion der Vibrationen des vibrierenden Zylinders zwischen der Lichtquelle und den Lichtdurchlässen Mittel zur Ausrichtung und Konzentration des Lichtes aufweisen, die vorzugsweise zwei reflektierende Flächen umfassen, die miteinander zusammenarbeiten, nämlich:
- eine erste im wesentlichen konische Fläche (28), deren Spitze zur Lichtquelle (9) hin gerichtet ist, deren Achse im wesentlichen mit der Symmetrieachse (72) des vibrierenden Zylinders (1) zusammenfällt und deren Erzeugende so gekrümmt ist, daß sie die konische Fläche (28) leicht auskehlt,
- eine zweite Fläche (29) in Form eines Kegelstumpfs mit einem Winkel von annähernd 45°, deren Achse mit der Achse der ersten Fläche (28) zusammenfällt, und mit einem Außendurchmesser, der etwas kleiner als der Innendurchmesser des vibrierenden Zylinders (1) ist.

6. Vibrierender Kreisel nach Anspruch 5, dadurch gekennzeichnet, daß mindestens eine der beiden reflektierenden Flächen (28) und (29) auf einer Seite einer Platte (22) angeordnet ist und somit einen Reflektor (10) bildet, und daß dieser Reflektor auf einer Seite (23), die der Seite (22) gegenüberliegt, einen Schaft (25) aufweist.

7. Vibrierender Kreisel nach einem der Ansprüche 3 und 6, dadurch gekennzeichnet, daß der vibrierende Zylinder (1) an seinem anderen Ende (19) durch einen Boden (20) geschlossen ist und daß er im Inneren eines vorzugsweise zylindrischen Gehäuses (6) angeordnet ist, das an einem seiner Enden durch einen Boden (12) geschlossen ist, wobei der Boden (20) des vibrierenden Zylinders durch ein Aufinaß (14) gegen den Boden (12) des Gehäuses (6) zur Anlage kommt, daß der Reflektor (10) im Inneren des vibrierenden Zylinders (1) angeordnet ist, gegen den Boden (20) des vibrierenden Zylinders durch ein Aufinaß (30) zur Anlage kommt, wobei der Schaft (25) des Reflektors (10) nacheinander durch den Boden (20) des vibrierenden Zylinders (1) und den Boden (12) des Gehäuses (6) läuft und die gesamte Anordnung vorzugsweise durch eine Schraubenmutter (45) gespannt ist, wobei die Aufmaße (14) und (30) vorzugsweise an zwei der drei durch den Schaft (25) montierten Teile und vorzugsweise einerseits auf der Seite (23) des Reflektors (10) und andererseits an der Außenseite des vibrierenden Zylinders (1) auf dem Boden (20) geformt sind, und zwar (30) bzw. (14).

8. Vibrierender Kreisel nach einem der Ansprüche 1 und 2, der mittels einer Elektronik ausgeführt ist, dadurch gekennzeichnet, daß diese Elektronik in einem Detektionsteil mindestens einen Polarisationskreis (62) aufweist und daß mindestens ein erster Zahn (33) des Stators (8) nicht magnetisch polarisiert ist, während mindestens ein anderer Zahn (33), der mit dem ersten einen ungeraden Mehrfachwinkel von 45° bildet, magnetisch polarisiert ist.

9. Vibrierender Kreisel nach Anspruch 1, dadurch gekennzeichnet, daß das dünne, vibrierende Element aus einer ebenen Scheibe besteht.
